(19) Europäisches Patentamt
European Patent Office
Office européen des brevets

(11) **EP 3 472 482 B1**

## (12) EUROPÄISCHE PATENTSCHRIFT

(45) Veröffentlichungstag und Bekanntmachung des Hinweises auf die Patenterteilung:
**29.03.2023 Patentblatt 2023/13**

(21) Anmeldenummer: **17727215.0**

(22) Anmeldetag: **02.06.2017**

(51) Internationale Patentklassifikation (IPC):
**F16D 3/00** *(2006.01)*    **F16D 3/38** *(2006.01)*
**F16D 3/202** *(2006.01)*

(52) Gemeinsame Patentklassifikation (CPC):
**F16D 3/385; F16C 33/6629;** F16C 19/52;
F16C 19/545; F16C 21/005; F16D 2300/06;
F16D 2300/08

(86) Internationale Anmeldenummer:
**PCT/EP2017/063418**

(87) Internationale Veröffentlichungsnummer:
**WO 2017/215950 (21.12.2017 Gazette 2017/51)**

(54) **GELENKANORDNUNG FÜR EINE GELENKWELLE**

JOINT ARRANGEMENT FOR AN ARTICULATED SHAFT

ENSEMBLE D'ARTICULATION POUR UN ARBRE DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2016 DE 102016210587**

(43) Veröffentlichungstag der Anmeldung:
**24.04.2019 Patentblatt 2019/17**

(73) Patentinhaber: **Voith Patent GmbH**
**89522 Heidenheim (DE)**

(72) Erfinder: **GRAWENHOF, Herr Peter**
**89547 Dettingen (DE)**

(74) Vertreter: **Voith Patent GmbH - Patentabteilung**
**St. Pöltener Straße 43**
**89522 Heidenheim (DE)**

(56) Entgegenhaltungen:
EP-A1- 0 323 755    EP-A2- 1 795 772
DE-A1- 3 644 204    DE-A1- 4 119 860
DE-A1- 4 128 179    DE-A1- 10 150 228
GB-A- 987 158    US-A- 3 178 907
US-A- 4 895 549

## Beschreibung

Die Erfindung betrifft eine Gelenkanordnung für eine Gelenkwelle.

Gelenkwellen sind zur Übertragung von Drehmomenten allgemein bekannt und üblich. Die Gelenke oder auch Kardangelenke sind dabei typischerweise aus einem Zapfenkreuz und zwei um 90 Grad zueinander verdrehten Gabeln ausgebildet, wobei jeder Zapfen des Zapfenkreuzes in einer Gabelbohrung der jeweiligen Achse der Gabeln angeordnet ist. Um mit den Gelenkwellen entsprechend hohe Drehmomente dauerhaft zuverlässig zu übertragen, sind die Zapfen in den Gabelbohrungen entsprechend gelagert, da es während des Betriebs zu einer ständigen Schwenkbewegung der Zapfen gegenüber den Gabelbohrungen kommt. Die Lager werden regelmäßig mit einem Gleitmittel wie zum Beispiel Lagerfett geschmiert.

Insbesondere bei Schwerlastgelenkwellen, welche insbesondere in Walzwerksantrieben und Hauptantrieben beim Walzen von Stahl vorgesehen sind, werden sehr hohe Drehmomente in einer Größenordnung von mehreren tausend Kilonewtonmetern übertragen. Um dies bewerkstelligen zu können, sind die Zapfen dabei typischerweise mit Radiallagern und Axiallagern in den Gabelbohrungen gelagert.

Zur Reduzierung des Verschleißes bei Gelenkwellen ist von der Firma Voith ein spezielles Schmiermittel entwickelt worden. Dieses Schmiermittel wird unter der Bezeichnung Voith WearCare 500 vertrieben. Mit diesem speziellen Schmierstoff konnte die Einlagerung von Metallpartikel in dem Lagerschmierstoff reduziert werden. Dennoch lässt sich ein gewisser Verschleiß bzw. metallischer Abrieb nicht ganz vermeiden. Die herausgelösten Metallpartikel wandern unter der Fliehkraft radial nach außen und lagern sich im Bereich der Lagerstirnseite an.

Die Lager von Kreuzgelenkanordnungen werden in regelmäßigen Zeitintervallen geschmiert, indem Schmiermittel durch eine in der Lagerbüchse vorgesehene Schmieröffnung hineingedrückt wird. Durch das Einpressen von Schmiermittel können die angelagerten Metallpartikel von dem Schmiermittel mitgenommen werden und so erneut in die Abwälzzone des Lagers gelangen. Werden die Partikel zwischen Lagerlaufbahn und Wälzkörper überrollt, führt dies zu lokal hohen Belastungen und letztlich zu einem vorzeitigen Ausfall des Lagers.

Aus der US 4,445 875 ist eine Kreuzgelenkanordnung bekannt, die eine zentrale Schmiermittelöffnung aufweist. Die Zapfen des Zapfenkreuzes sind mit Ölreservoiren versehen. In den Ölreservoiren sind Ölkontroller angeordnet, die aus porösem Plastikmaterial bestehen. Diese Ölkontroller haben die Aufgabe Fremdpartikel aus dem Öl herauszufiltern. Weiterhin hat der Ölkontroller die Aufgabe bei Stillstand zu verhindern, dass das Öl in das Zentrum des Kreuzgelenkes zurückfließt.

Die DE 10 15 02 28 A1 zeigt die Vorderachse eines Kraftfahrzeugs mit einem Radiallager zur Lagerung eines Achsschenkelbolzens und eine Lagerbüchse bildenden topfförmigen Hülse mit einem abgedichteten Schmiermittelreservoir, Verunreinigungen verbleiben jedoch im Bereich der Lagerung.

Die DE 41 19 86 0 A1 zeigt eine Lagerbüchse aus einer zylindrischen Hülse und einem verstärkten Büchsenboden. Die Lagerbuchse ist zwar einfach zu fertigen und kann eine hohe axiale Kraft aufnehmen, Verschmutzungen verbleiben jedoch in dem Lager.

Die EP 0 32 37 55 A1 zeigt ein Lagergehäuse mit einer Vertiefung und einem einer Dichtscheibe, der die Vertiefung abdichtet, wobei kein Schmiermittel in die Vertiefung gelangt.

Die US 3178807 zeigt eine Gelenkwelle, bei der die Lager mit einer Öse gekapselt sind, und das Lager und die Öse mittels Klemmring gesichert sind. Die Kapselung kann Schmiermittel in dem Lagerbereich halten.

Aus der EP 1 795 772 ist eine Kreuzgelenkanordnung mit Radiallager und Axiallager an den Enden der Zapfen bekannt. Als Axiallager ist ein Gleitlager vorgesehen. Das Gleitlager umfasst eine Axiallagerdruckscheibe. Diese Druckscheibe umfasst einen zur Gelenkgabel gerichteten Abstützbereich und einen flächigen an dem Zapfen anliegenden Bereich. Der Abstützbereich kann als Vorsprung der Axiallagerdruckscheibe ausgestaltet sein.

Auch die DE 36 44 204 zeigt ein Kreuzgelenk für eine Gelenkwelle. Es sind Radiallager und Axiallager für die Lagerung der Zapfen des Kreuzgelenkes vorgesehen. Das Axiallager befindet sich zwischen der Stirnseite des Zapfens und einem Lagerdeckel. Der Lagerdeckel ruht auf einer von der Gelenkwellen-Drehachse abgewandten Stützfläche des Gabelauges. Entlang der Achsen der Zapfen erstreckt sich eine zentrale Längsbohrung durch das Zapfenkreuz. Durch einen Zuganker sind die Beiden gegenüberliegenden Lagerdeckel miteinander verbunden. Durch den Anker können die Axiallager unter eine definierte Vorspannung gesetzt werden. Zwischen zwei Lagerringen der Radiallager kann im Bereich der Zapfenwurzel eine Dichtung und zwischen Lagerdeckel und Außenring eine weitere Dichtung gegen Austritt von Schmiermittel und Eintritt von Schmutz vorgesehen sein.

Die DE 41 28 179 betrifft eine Abdichtung für Lagerbüchsen von Kreuzgelenken. Diese Abdichtung ist an der radial inneren Seite der Lagerbüchse angeordnet und weist einen Sammelraum für Wasser und Schmutzteilchen. Bei Stillstand der Kardanwelle kann das Wasser aus dem Sammelraum nach außen entweichen. Bei Rotation wird das Wasser durch die wirkende Fliehkraft in dem Sammelraum gehalten.

Aus der GB 987,158 ist ein Kardangelenk bekannt, bei dem ein Eindringen von Dreck und Wasser in das Nadellager des Kreuzgelenkes verhindert ist. Das Kreuzgelenk weist ein Kreuz mit vier Armen auf. Die freien Enden des Kreuzgelenkarmes sind jeweils durch Nadellager endseitig gelagert. Auf der dem Kreuz zugewandten Seite des Nadellagers sind zur Abdichtung des Nadellagers mehrere Dichtungen hintereinander angeordnet. Die Dichtungen befinden sich somit am offenen Ende der Lagerschale. Ein weiteres Beispiel für eine Gelenkanordnung findet sich auch in US 4 895 549 A.

Der Erfindung liegt daher die Aufgabe zugrunde, eine Beanspruchung der Kreuzgelenkanordnung durch Verunreinigungen zu reduzieren.

Die erfindungsgemäße Lösung ist durch die Merkmale der unabhängigen Ansprüche charakterisiert. Vorteilhafte Ausgestaltungen sind in den Unteransprüchen wiedergegeben.

Durch die Maßnahme, eine ringförmige Vertiefung in der Abdeckung des Zapfens vorzusehen, wobei die Vertiefung eine Öffnung in Richtung des axialen freien Endes des Zapfens aufweist, ist es möglich, durch Verunreinigungen bedingte Beanspruchungen, insbesondere der Lager, zu verringern. Durch eine Rotation der Gelenkanordnung im Betrieb können Verunreinigungen durch die wirkende Zentrifugalkraft begünstigt in die ringförmige Vertiefung eintreten.

Vorzugsweise wird bei einem Nachschmieren das Schmiermittel über der Vertiefung hinweggeführt. Damit wird verhindert, dass Verunreinigungen durch neu eingebrachtes Schmiermittel insbesondere in die Lager der Zapfen hineingetrieben werden. Gelangen Verunreinigungen in die Lager, so können dort die Lager, insbesondere die Laufflächen beschädigt werden. Es hat sich als vorteilhaft herausgestellt diese Gelenkanordnung, insbesondere bei Kreuzgelenken, zu verwenden.

In einer bevorzugten Ausführungsform sind Schmiermittelnuten in einem innerhalb der Abdeckung angeordneten Axiallager und/oder in der Abdeckung selbst ausgebildet. Durch die Schmiermittelnuten kann das Fett hindurchströmen. Die Schmiermittelnuten sind dafür derart angeordnet, dass ein Schmiermittelstrom an der ringförmigen Vertiefung vorbei geführt wird. Insbesondere wird der Schmiermittelstrom oberhalb der Öffnung der ringförmigen Vertiefung vorbeigeführt.

Die Abdeckung ist an dem freien axialen Ende der Zapfen angeordnet. Die Abdeckung kann auch in Form eines Gelenkdeckels ausgeführt sein. Die Öffnung der ringförmigen Vertiefung ist dabei der Rotationsachse zugewandt.

In einer bevorzugten Ausführungsform ist die Mittenachse der Abdeckung senkrecht zur Rotationsachse der Gelenkanordnung angeordnet. Der Zapfen ist senkrecht zur Rotationsachse ausgerichtet.

In einer bevorzugten Ausführungsform ist die ringförmige Vertiefung koaxial zur Axialachse des Zapfens angeordnet. Vorzugsweise ist die Öffnung radial zur Axialachse des Zapfens angeordnet.

In einer bevorzugten Ausführungsform ist der Zapfen der Gelenkanordnung durch ein Radiallager gelagert, wobei das Radiallager koaxial zum Zapfen angeordnet ist. Die ringförmige Vertiefung ist zumindest teilweise auf radialer Höhe des Radiallagers angeordnet. Dadurch überlappt die Öffnung der ringförmigen Vertiefung den Bereich der radialen Erstreckung des Radiallagers zumindest teilweise. Durch die wirkende Zentrifugalkraft im Betrieb können insbesondere aus dem Radiallager austretende Verunreinigungen, insbesondere Abrieb, in der ringförmigen Vertiefung gesammelt werden. Dadurch kann auch verhindert werden, dass aus dem Radiallager austretende Verunreinigungen in das Axiallager, zusammen mit auftretenden Schmiermittelströmungen, gefördert werden.

In einer bevorzugten Ausführungsform ist vorgesehen, dass die ringförmige Vertiefung durch einen in die Abdeckung eingepressten Ring gebildet ist. Dadurch ist die Herstellung der Vertiefung einfach. Auch kann nachträglich eine derartige Vertiefung in einer Abdeckung integriert werden.

In einer bevorzugten Ausführungsform ist vorgesehen, dass nach einem Abschmieren der Gelenkanordnung das neu eingebrachte Schmiermittel durch eine radial innere Wandung der ringförmigen Vertiefung das Schmiermittel an der ringförmigen Öffnung vorbeigeführt wird, um das Radiallager zu erreichen.

In einer anderen bevorzugten Ausführungsform ist vorgesehen, dass die ringförmige Vertiefung durch einen mit U-Querschnitt umlaufenden Ring gebildet ist. Auch eine derartige ringförmige Vertiefung kann nachträglich in einer Abdeckung ausgebildet werden.

In einer bevorzugten Ausführungsform ist vorgesehen, dass die ringförmige Vertiefung durch einen Wellendichtring gebildet ist, wobei durch den Wellendichtring vorzugsweise eine Verbindung von dem Radiallager in Richtung zu einem am axialen Ende des Zapfens vorgesehenen Axiallagers unterbrochen wird. Dadurch ist nur noch ein Schmiermittelstrom von einem am axialen Ende des Zapfens vorgesehenen Axiallager in Richtung Radiallager möglich.

In einer bevorzugten Ausführungsform ist vorgesehen, dass die radiale Erstreckung L der ringförmigen Vertiefung, insbesondere die Öffnung der ringförmigen Vertiefung, mindestens dem halben Durchmesser DW von den Wälzkörpern des Radiallagers entspricht. Durch diese Dimensionierung der ringförmigen Vertiefung, insbesondere der Öffnung, kann sichergestellt werden, dass ein Großteil der Verunreinigungen sich in der Vertiefung sammeln.

In einer bevorzugten Ausführung ist vorgesehen, dass die maximale Tiefe der ringförmigen Vertiefung mindestens 2mm ist, vorzugsweise bei einem Zapfendurchmesser von 50 mm mindestens 3 mm ist. Durch diese Tiefe wird verhindert, dass die in der Vertiefung angesammelten Verunreinigungen aus der Vertiefung wieder herausgetragen werden.

In einer bevorzugten Ausführungsform ist vorgesehen, dass die ringförmige Vertiefung einen Boden aufweist, wobei der Boden mit einem Winkel von 0° bis 60° zu einer zur axialen Richtung des Zapfens senkrecht verlaufenden Ebene ausgebildet ist, wobei vorzugsweise die maximale Tiefe T radial innen ausgebildet ist. Durch diesen Neigungswinkel des Bodens wird ein Sammeln von Verunreinigungen an der tiefsten Stelle erreicht, wodurch ein Heraustreten aus der Vertiefung erschwert wird. Vorzugsweise ist der Verlauf des Bodens parallel zur Außenseite der Abdeckung ausgebildet ist.

In einer bevorzugten Ausführungsform ist vorgesehen, dass für das Verhältnis von maximaler Tiefe T und radialen Erstreckung L der ringförmigen Vertiefung gilt:

L/T <4. Durch dieses Verhältnis wird ein Verbleib von einmal in die Vertiefung eingetretene Verunreinigungen begünstigt.

In einer bevorzugten Ausführungsform ist vorgesehen, dass in der Abdeckung mindestens eine Kontrollöffnung vorgesehen ist. Durch die Kontrollöffnung ist eine Kontrolle des Inhaltes der ringförmigen Vertiefung möglich. Die Kontrollöffnung ist vorzugsweise als wiederverschließbare Kontrollöffnung ausgebildet. Die Kontrollöffnung ist im Bereich der ringförmigen Vertiefung der Abdeckung ausgebildet. Durch Öffnen der Kontrollöffnung kann Material aus der ringförmigen Vertiefung entnommen werden. Dadurch ist eine Analyse dieses Materials möglich.

In einer bevorzugten Ausführungsform ist die Kontrollöffnung in einem radialen Winkelbereich von 20° bis 70° senkrecht zur Lagerachse im Hauptlastbereich angeordnet. Vorzugsweise ist beidseitig im Hauptlastbereich jeweils eine Kontrollöffnung vorgesehen.

Es hat sich als vorteilhaft herausgestellt bei einem Kreuzgelenk für alle Gelenkanordnungen des Kreuzgelenkes eine Gelenkanordnung mit den zuvor beschriebenen Ausbildungen vorzusehen. Vorzugsweise sind alle verwendeten Gelenkanordnungen eines Kreuzgelenkes baugleich.

Ausführungsformen der erfindungsgemäßen Lösung werden nachfolgend anhand der Figuren erläutert. Einzelne Ausführungsbeispiele können eigenständige erfinderische Aspekte umfassen. Darin ist im Einzelnen folgendes dargestellt:

| | |
|---|---|
| Figur 1: | Fettfluss in einer Lagerbüchse einer Gelenkanordnung mit Auffangnut |
| Figur 2 : | Darstellung der Bewegung von Verunreinigungspartikeln |
| Figur 3 : | Vergrößerte Darstellung des Fettflusses im Bereich der Auffangnut |
| Figur 4: | Darstellung der Maße der Auffangnut |
| Figur 5: | Anordnung der Auffangnut radial außen |
| Figur 6: | geschraubter Lagerdeckel mit Auffangnut |
| Figur 7: | Axiallager am Zapfenende und Auffangnut |
| Figur 8: | Auffangnut mit Einpressring |
| Figur 9: | Lagerdeckel mit Ring mit U-Querschnitt |
| Figur 10: | Lagerdeckel mit Wellendichtring zur Bildung einer Auffangnut |
| Figur 11: | Seitenansicht der Gelenkgabel mit Kontrollöffnung |
| Figur 12: | Schnitt durch die Kontrollöffnung |

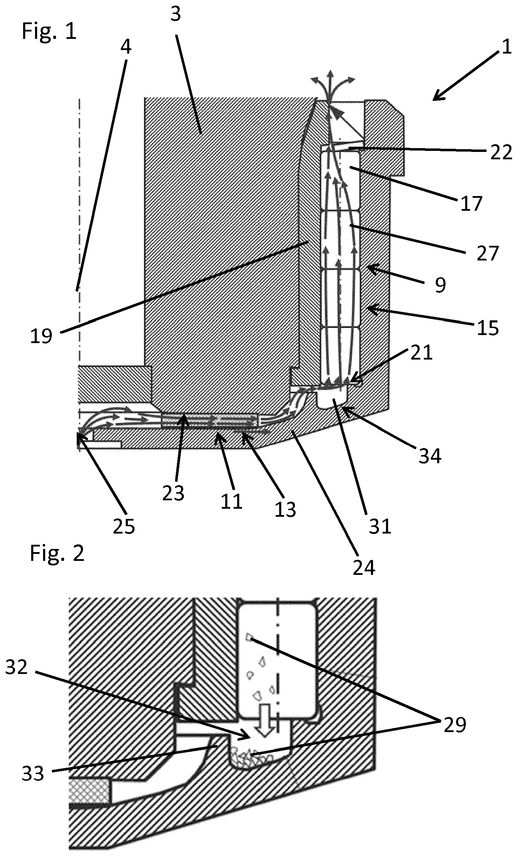

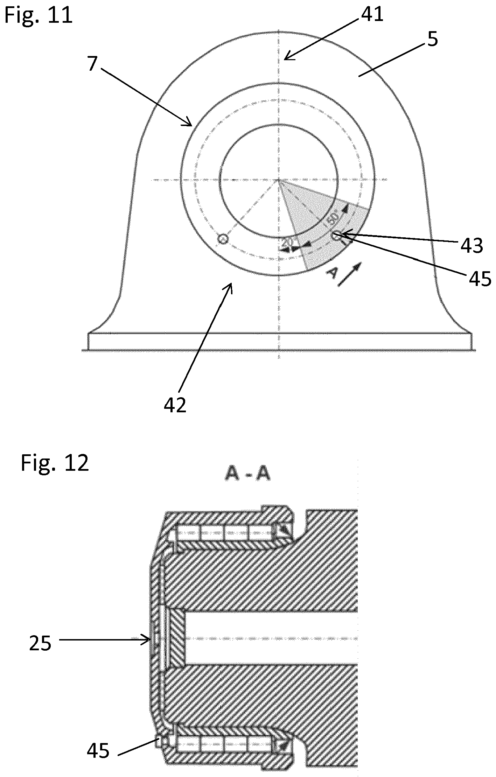

In Figur 1 ist eine Gelenkanordnung 1 dargestellt. Die Gelenkanordnung weist einen Zapfen 3 mit einer Axialachse 4 auf. Für eine Lagerung des Zapfens 3 in einer Gelenkgabel 5, wie in Figur 11 dargestellt, ist ein Radiallager 9 und ein Axiallager 11 vorgesehen. In dem dargestellten Ausführungsbeispiel ist als Radiallager 9 ein Wälzlager 15 mit Wälzkörpern 17 vorgesehen. Die Wälzkörper 17 sind mittels einer Lagerschale 19 in einer den Zapfen 3 koaxial umgebenden Abdeckung 24 gelagert. Durch einen an der Abdeckung 24 ausgebildeten Anschlag 21, der mit einem Federelement 22 zusammenwirkt, sind die Wälzkörper 17 gelagert. Der Zapfen 3 weist ein freies Ende 23 auf. Zwischen der Abdeckung 24 und dem freien Ende des Zapfens 23 ist ein Gleitlager 13 als Axiallager 11 angeordnet.

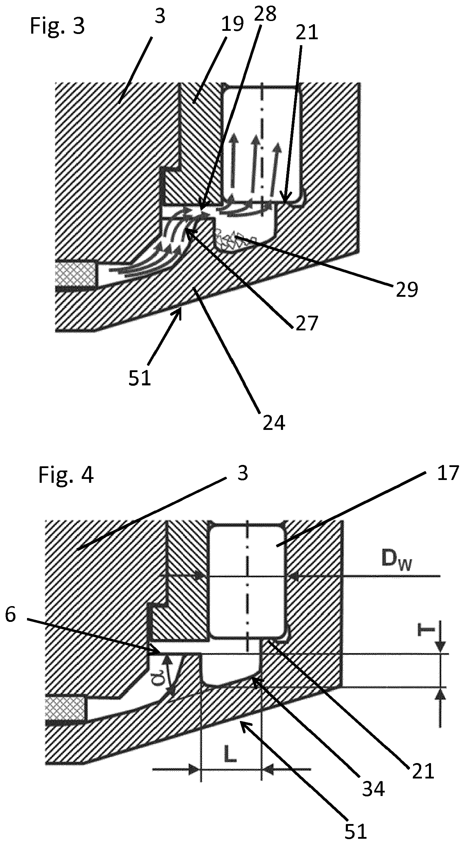

Für die Schmierung der Lager 9 und 11 wird Schmiermittel durch eine Schmiermittelöffnung 25 eingebracht. Die Schmiermittelöffnung ist erfindungsgemäß in der Abdeckung 24 ausgebildet. Aufgrund der Bewegung der Gelenkanordnung 1 bewegt sich das Schmiermittel entlang einem Schmiermittelweg 27. In der Abdeckung 24 ist eine ringförmige Vertiefung 31 ausgebildet. Die ringförmige Vertiefung 31 weist eine Öffnung 32 auf. Diese Öffnung weist in Richtung Radiallager 9. In Figur 3 ist der Bereich um die ringförmige Vertiefung mit der Strömung des Schmiermittels und Verunreinigungen vergrößert dargestellt. Es ist deutlich zu sehen, dass die ringförmige Vertiefung 31 radial innen eine Wandung 33 aufweist, wobei zwischen axialem freiem Ende der Wandung 33 und der Lagerschale 19 ein in radialer Richtung verlaufender Spalt 28 für das Schmiermittel ausgebildet ist. Durch diesen Spalt 28 kann Schmiermittel von der Schmiermittelöffnung 25 über das Axiallager 11 zu dem Radiallager 9 gelangen. Der Schmiermittelweg ist durch Pfeile in Figur 3 gekennzeichnet und mit Bezugszeichen 27 bezeichnet.

In Figur 2 sind Verunreinigungen 29 in Form von Abrieb/Partikeln 29 dargestellt. Dieser Abrieb 29 befindet sich im Schmiermittel. Aufgrund der wirkenden Zentrifugalkraft sammeln sich die Partikel 29 in der ringförmigen Vertiefung 31 an. Bei den Verunreinigungen handelt es sich um Abrieb, insbesondere um metallischen Abrieb, der eine höhere Dichte als das Schmiermittel aufweist und daher vom Radiallager 9 in Richtung Vertiefung 31 im Betrieb der Gelenkanordnung durch die wirkende Zentrifugalkraft beschleunigt wird. Die ringförmige Vertiefung 31 weist eine Öffnung 32 auf, die dem Radiallager 9 zugewandt ist.

In Figur 4 ist eine Detailzeichnung der ringförmigen Vertiefung 31 gezeigt. Die ringförmige Vertiefung 31 ist im Vergleich zu der radialen Erstreckung der Wälzkörper 17 nach radial innen versetzt. Die ringförmige Vertiefung 31 ist mit einer Tiefe T ausgebildet und weist eine radiale Erstreckung von L auf. Die radiale Erstreckung der Wälzkörper ist $D_w$. Die ringförmige Vertiefung 31 weist einen Boden 34 auf. Dieser Boden ist nach radial innen geneigt. Der Neigungswinkel $\alpha$ weist vorzugsweise einen Winkel zwischen 0° und 60° auf. Der Neigungswinkel ist der Winkel zwischen einer zur Axialachse des Zapfens senkrecht verlaufenden Ebene und dem zu dieser Ebene jeweils ausgebildeten Winkel des Bodens der ringförmigen Vertiefung 31. Durch die radiale Erstreckung der ringförmigen Vertiefung 31 insbesondere der radialen Erstreckung der Öffnung der ringförmigen Vertiefung wird mitbeeinflusst, wie hoch der Anteil an Verunreinigungen ist, die in die Vertiefung hineingelangen. Durch den Neigungswinkel wird eine Ansammlung an dem radial innen gelegenen tiefsten Punkt der ringförmigen Vertiefung 31 erreicht und dadurch ein Verlassen der Verunreinigungen 29 der ringförmigen Vertiefung 31 erschwert. Der Boden 34 verläuft vorzugsweise parallel zur axialen Außenseite 51 der Abdeckung 24.

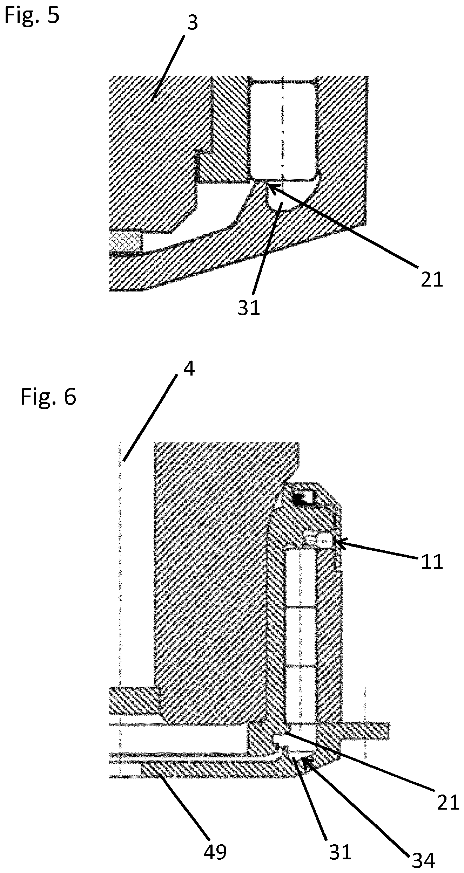

In den Figuren sind verschiedene Ausführungen der ringförmigen Vertiefung 31 gezeigt. Wie in Figur 5 gezeigt, kann die ringförmige Vertiefung 31 auch in Bezug auf die radiale Position der Wälzkörper 17 des Radiallagers radial außen mit der radialen Position des Radiallagers 9 überlappend angeordnet sein.

Bei der in Figur 6 gezeigten Ausführung ist das Axiallager 11 nicht am freien Ende des Zapfens angeordnet sondern das Axiallager ist endseitig an der dem freien Zapfenende abgewandten Seite des Radiallagers 9 angeordnet. Bei dieser Ausführung ist ein Lagerdeckel 49 vorgesehen, in dem die ringförmige Vertiefung 31 ausgebildet ist. Wird der Lagerdeckel 49 abgenommen, so ist die ringförmige Vertiefung 31 leicht zugänglich und kann leicht gereinigt werden.

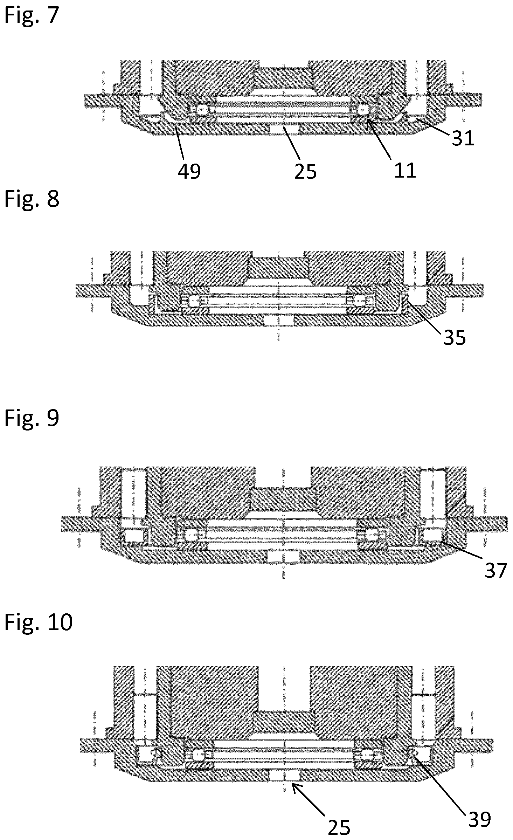

In Figur 7 ist ein geschraubter Lagerdeckel 49 gezeigt, in dem die ringförmige Vertiefung 31 ausgebildet ist. Radial innerhalb der ringförmigen Vertiefung 31 ist ein Axiallager 11 angeordnet.

In Figur 8 ist eine ringförmige Vertiefung 31 gezeigt, die durch einen Ring 35 gebildet ist. Der Ring 35 kann eingeklebt oder eingepresst werden.

In Figur 9 ist eine ringförmige Vertiefung 31 gezeigt, die durch ein ringförmiges U-Profil 37 gebildet ist. Ein derartiges U-Profil kann auch nachträglich eingebracht werden. Das U-Profil 37 kann durch Kleben oder Einpressen in dem Deckel 49 befestigt werden.

In Figur 10 wird der ringförmigen Auffangbehälter 37 durch Verwendung eines Wellendichtrings 39 gebildet. Durch die Wellendichtung 39 ist ein Rückstrom von Schmiermittel zum in dem Lagerdeckel 49 angeordneten Axiallager 11 verhindert.

In Figur 11 ist eine Lagerbohrung 7 einer Gelenkwelle gezeigt. Die Lagerbohrung hat eine Lagerachse 41. Die Lagerachse 41 entspricht der Rotationsachse einer nicht weiter dargestellten Gelenkanordnung einer Gelenkwelle. Die Lagerbohrung 7 weist einen Hauptlastbereich 42 auf. In diesem Hauptlastbereich sind in dem dargestellten Ausführungsbeispiel zwei Inspektionsöffnungen 43 ausgebildet. Es kann auch die Ausbildung von nur einer oder mehr als zwei Inspektionsöffnungen 43 vorgesehen sein. Diese Inspektionsöffnungen sind wiederverschließbar mittels einer Verschlussschraube 45. Durch die Inspektionsöffnungen ist eine rasche Lagerinspektion möglich, da sich über den Anlagerungsgrad mit Schmutzpartikeln ablesen lässt, wie weit ein Lager bereits vorgeschädigt ist. Bevorzugt werden Inspektionsöffnungen 43 im Hauptlastbereich 42 der Lager in einem Winkelbereich zwischen 20° und 70° zur Lagerachse 41 vorgesehen. Diese Inspektionsöffnungen sind auf radialer Höhe der ringförmigen Vertiefung 31 angeordnet.

**Bezugszeichenliste:**

1 Gelenkanordnung
3 Zapfen (Zapfenkreuzes)
4 Axialachse des Zapfens
5 Gelenkgabel
7 Lagerbohrung
9 Radiallager
11 Axiallager
13 Gleitlager
15 Wälzlager
17 Wälzkörper
19 Lagerschale
21 Anschlag (Wälzelemente)
22 Federelement
23 freies axiales Ende des Zapfens
24 Abdeckung
25 Schmiermittelöffnung
27 Schmiermittelweg
28 Spalt
29 Partikel, Abrieb, Verunreinigung
31 ringförmige Vertiefung
32 Öffnung der Vertiefung
33 Wandung
34 Boden
35 Ring
37 ringförmiger Auffangbehälter mit U-Profil
39 Wellendichtring
41 Lagerachse
42 Hauptlastbereich
43 Inspektionsöffnung
45 Verschlussschraube
49 Lagerdeckel
51 axiale Außenseite der Abdeckung
DW Durchmesser Wälzlager
T Tiefe der Auffangvertiefung
L Radiale Erstreckung der Auffangvertiefung
α Neigungswinkel der Auffangvertiefung

**Patentansprüche**

1. Gelenkanordnung (1), umfassend einen Zapfen (3), der in einer Lagerbohrung (7) einer Gelenkgabel (5) gelagert ist, wobei der Zapfen (3) an seinem freien axialen Ende (23) mit einer Abdeckung (24) versehen ist und wobei die Abdeckung (24) eine ringförmige Vertiefung (31) für einen begünstigten Eintritt von Verunreinigungen bei der Rotation der Gelenkanordnung aufweist, wobei die Vertiefung (31) eine Öffnung (32) umfasst und diese Öffnung (32) einerseits in Richtung dem axialen freien Ende (23) des Zapfens (3) und andererseits in Richtung eines Radiallager (9), der mittels einer Lagerschale (19) in einer den Zapfen (3) koaxial umgebenden Abdeckung (24) gelagert ist, ausgerichtet ist, wobei die ringförmige Vertiefung (31) radial innen eine Wandung (33) aufweist,

**dadurch gekennzeichnet, dass**
die Abdeckung (24) mit einer Schmiermittelöffnung (25) versehen ist (S.7, Z.15,16), und zwischen axialem freiem Ende der Wandung (33) und der Lagerschale (19) ein in radialer Richtung verlaufender Spalt (28) für das Schmiermittel ausgebildet ist.

2. Gelenkanordnung (1) nach Anspruch 1, wobei der Zapfen (3) durch ein Radiallager (9) gelagert ist und das Radiallager (9) koaxial den Zapfen (3) umgibt, **dadurch gekennzeichnet,**
**dass** die ringförmige Vertiefung (31) zumindest teilweise auf radialer Höhe des Radiallagers (9) angeordnet ist.

3. Gelenkanordnung (1) einem der vorhergehenden Ansprüche,
**dadurch gekennzeichnet,**
**dass** die ringförmige Vertiefung (31) durch einen in die Abdeckung (24) eingepressten Ring (35) gebildet ist.

4. Gelenkanordnung (1) nach einem der vorstehenden Ansprüche,
**dadurch gekennzeichnet,**
**dass** die ringförmige Vertiefung (31) durch einen mit U-Querschnitt umlaufenden Ring (37) gebildet ist.

5. Gelenkanordnung (1) nach einem der vorstehenden Ansprüche,
**dadurch gekennzeichnet,**
**dass** die ringförmige Vertiefung (31) durch einen Wellendichtring (39) gebildet ist, wobei durch den Wellendichtring (39) vorzugsweise eine Verbindung von dem Radiallager (9) in Richtung zu einem am axialen Ende des Zapfens (23) vorgesehenen Axiallagers (11) unterbrochen wird.

6. Gelenkanordnung (1) nach einem der vorstehenden Ansprüche,
**dadurch gekennzeichnet,**
**dass** die radiale Erstreckung (L) der ringförmigen Vertiefung (31) mindestens dem halben Durchmesser (DW) von Wälzkörpern (17) des Radiallagers (9) entspricht.

7. Gelenkanordnung (1) nach einem der vorstehenden Ansprüche,
**dadurch gekennzeichnet,**
**dass** die maximale Tiefe (T) der ringförmigen Vertiefung (31) mindestens 2mm ist, vorzugsweise bei einem Zapfendurchmesser (DW) von 50 mm mindestens 3mm ist.

8. Gelenkanordnung (1) nach einem der vorstehenden Ansprüche,
**dadurch gekennzeichnet,**
**dass** die ringförmige Vertiefung (31) einen Boden (34) aufweist, wobei der Boden (34) in einem Winkel ($\alpha$) zwischen 0° bis 60° zu einer zur axialen Richtung (4) des Zapfens (3) senkrecht verlaufenden Ebene (6) ausgebildet ist, wobei vorzugsweise die maximale Tiefe (T) radial innen ausgebildet ist.

9. Gelenkanordnung (1) nach einem der vorstehenden Ansprüche,
**dadurch gekennzeichnet,**
**dass** die ringförmige Vertiefung (31) einen Boden (34) aufweist, wobei der Boden (34) parallel zur Außenseite der Abdeckung (24) ausgebildet ist.

10. Gelenkanordnung (1) nach einem der vorhergehenden Ansprüche,
**dadurch gekennzeichnet,**
**dass** für das Verhältnis von maximaler Tiefe T und radialen Erstreckung L der ringförmigen Vertiefung (31) gilt:

$$L/T < 4.$$

11. Gelenkanordnung (1) nach einem vorstehenden Anspruch,
**dadurch gekennzeichnet,**
**dass** die Abdeckung (24) einen Lagerdeckel (49) aufweist, der die ringförmige Vertiefung (31) umfasst.

12. Gelenkanordnung nach einem der vorstehenden Ansprüche,
**dadurch gekennzeichnet,**
**dass** nach einem Abschmieren der Gelenkanordnung (1) das neu eingebrachte Schmiermittel (25) durch die radial innere Wandung der ringförmigen Vertiefung (31) an der ringförmigen Öffnung vorbeigeleitet wird.

13. Kreuzgelenk umfassend Gelenkanordnungen (1) nach einem der vorhergehenden Ansprüche,
**dadurch gekennzeichnet,**
**dass** allen Zapfenenden eine ringförmige Vertiefung (31) zugeordnet ist.

**Claims**

1. Joint arrangement (1) comprising a journal (3) which is mounted in a bearing bore (7) of a joint yoke (5), wherein the journal (3) is provided at its free axial end (23) with a covering (24), and wherein the covering (24) has an annular depression (31) for facilitated entry of impurities during the rotation of the joint arrangement, wherein the depression (31) comprises an opening (32) and this opening (32) is oriented in the direction of the axial free end (23) of the journal (3), on the one hand, and in the direction of a radial bearing (9), on the other hand, which radial bearing is mounted, by means of a bearing shell (19), in a covering (24) which coaxially surrounds the journal (3), wherein the annular depression (31) has a wall (33) radially at the inside, **characterized in that** the covering (24) is provided with a lubricant opening (25), and a gap (28) for the lubricant extending in a radial direction is formed between the axial free end of the wall (33) and the bearing shell (19).

2. Joint arrangement (1) according to Claim 1, wherein the journal (3) is mounted by a radial bearing (9) and the radial bearing (9) coaxially surrounds the journal (3), **characterized in that** the annular depression (31) is arranged at least partially at the radial height of the radial bearing (9).

3. Joint arrangement (1) according to either of the preceding claims, **characterized in that** the annular depression (31) is formed by a ring (35) which is pressed into the covering (24).

4. Joint arrangement (1) according to one of the preceding claims, **characterized in that** the annular depression (31) is formed by a ring (37) which extends in an encircling manner with a U-shaped cross section.

5. Joint arrangement (1) according to one of the preceding claims, **characterized in that** the annular depression (31) is formed by a shaft-sealing ring (39), wherein, by way of the shaft-sealing ring (39), preferably a connection from the radial bearing (9) in the direction of an axial bearing (11) provided at the axial end of the journal (23) is interrupted.

6. Joint arrangement (1) according to one of the preceding claims, **characterized in that** the radial extent (L) of the annular depression (31) corresponds at least to half the diameter (DW) of rolling bodies (17) of the radial bearing (9).

7. Joint arrangement (1) according to one of the preceding claims, **characterized in that** the maximum depth (T) of the annular depression (31) is at least 2 mm, preferably being at least 3 mm for a journal diameter (DW) of 50 mm.

8. Joint arrangement (1) according to one of the preceding claims, **characterized in that** the annular depression (31) has a base (34), wherein the base (34) is formed at an angle ($\alpha$) of between 0° and 60° to a plane (6) which extends perpendicularly to the axial direction (4) of the journal (3), wherein preferably the maximum depth (T) is formed radially at the inside.

9. Joint arrangement (1) according to one of the preceding claims, **characterized in that** the annular depression (31) has a base (34), wherein the base (34) is formed so as to be parallel to the outer side of the covering (24).

10. Joint arrangement (1) according to one of the preceding claims, **characterized in that**, for the ratio of maximum depth T and radial extent L of the annular depression (31), it holds that:

$$L/T < 4.$$

11. Joint arrangement (1) according to a preceding claim, **characterized in that** the covering (24) has a bearing cover (49) which comprises the annular depression (31).

12. Joint arrangement according to one of the preceding claims, **characterized in that**, after a lubrication of the joint arrangement (1), the newly introduced lubricant (25) is guided by way of the radially inner wall of the annular depression (31) past the annular opening.

13. Universal joint comprising joint arrangements (1) according to one of the preceding claims, **characterized in that** all the journal ends are assigned an annular depression (31).

## Revendications

1. Ensemble d'articulation (1), comprenant un tourillon (3) qui est monté dans un alésage de palier (7) d'une fourche d'articulation (5), le tourillon (3) étant pourvu d'un recouvrement (24) à son extrémité axiale libre (23) et le recouvrement (24) présentant un évidement annulaire (31) pour une entrée avantageuse d'impuretés lors de la rotation de l'ensemble d'articulation, l'évidement (31) comprenant une ouverture (32) et cette ouverture (32) étant orientée d'un côté en direction de l'extrémité axiale libre (23) du tourillon (3) et de l'autre côté en direction d'un palier radial (9) qui est monté au moyen d'un coussinet de palier (19) dans un recouvrement (24) entourant coaxialement le tourillon (3), l'évidement annulaire (31) présentant une paroi (33) radialement à l'intérieur, **caractérisé en ce que** le recouvrement (24) est pourvu d'une ouverture pour lubrifiant (25) (p.7, 1.15, 16), et une fente (28) pour le lubrifiant est formée entre l'extrémité axiale libre de la paroi (33) et le coussinet de palier (19), laquelle fente s'étend dans la direction radiale.

2. Ensemble d'articulation (1) selon la revendication 1, le tourillon (3) étant monté à travers un palier radial (9) et le palier radial (9) entourant coaxialement le tourillon (3),
   **caractérisé en ce que**
   l'évidement annulaire (31) est disposé au moins partiellement à hauteur radiale du palier radial (9).

3. Ensemble d'articulation (1) selon l'une des revendications précédentes,
   **caractérisé en ce que**
   l'évidement annulaire (31) est formé par une bague (35) enfoncée dans le recouvrement (24).

4. Ensemble d'articulation (1) selon l'une des revendications précédentes,
   **caractérisé en ce que**
   l'évidement annulaire (31) est formé par une bague (37) périphérique avec une section transversale en U.

5. Ensemble d'articulation (1) selon l'une des revendications précédentes,
   **caractérisé en ce que**
   l'évidement annulaire (31) est formé par une bague d'étanchéité d'arbre (39), de préférence un liaison à partir du palier radial (9) en direction d'un palier axial (11) prévu à l'extrémité axiale du tourillon (23) étant interrompue par la bague d'étanchéité d'arbre (39).

6. Ensemble d'articulation (1) selon l'une des revendications précédentes,
   **caractérisé en ce que**
   l'étendue radiale (L) de l'évidement annulaire (31) correspond au moins au demi-diamètre (DW) de corps de roulement (17) du palier radial (9).

7. Ensemble d'articulation (1) selon l'une des revendications précédentes,
   **caractérisé en ce que**
   la profondeur maximale (T) de l'évidement annulaire (31) est d'au moins 2 mm, de préférence est d'au moins 3 mm pour un diamètre de tourillon (DW) de 50 mm.

8. Ensemble d'articulation (1) selon l'une des revendications précédentes,
   **caractérisé en ce que**
   l'évidement annulaire (31) présente un fond (34), le fond (34) étant formé suivant un angle ($\alpha$) entre 0° et 60° par rapport à un plan (6) s'étendant perpendiculairement à la direction axiale (4) du tourillon (3), de préférence la profondeur maximale (T) étant formée radialement à l'intérieur.

9. Ensemble d'articulation (1) selon l'une des revendications précédentes,
   **caractérisé en ce que**
   l'évidement annulaire (31) présente un fond (34), le fond (34) étant formé parallèlement au côté extérieur du recouvrement (24).

10. Ensemble d'articulation (1) selon l'une des revendications précédentes,
    **caractérisé en ce que**,
    pour le rapport de la profondeur maximale T à l'étendue radiale L de l'évidement annulaire (31), l'on a :

$$\mathrm{L/T} \ < \ 4.$$

11. Ensemble d'articulation (1) selon une revendication précédente,
    **caractérisé en ce que**
    le recouvrement (24) présente un couvercle de palier (49) qui comprend l'évidement annulaire (31).

12. Ensemble d'articulation selon l'une des revendications précédentes,
    **caractérisé en ce**
    **qu'**après une lubrification de l'ensemble d'articulation (1), le lubrifiant (25) nouvellement introduit est guidé à travers la paroi radialement intérieure de l'évidement annulaire (31) devant l'ouverture annulaire.

13. Joint à croisillon comprenant des ensembles d'articulation (1) selon l'une des revendications précédentes,
    **caractérisé en ce**
    **qu'**un évidement annulaire (31) est associé à toutes les extrémités de tourillon.

Fig. 1

Fig. 2

Fig. 3

Fig. 4

Fig. 5

Fig. 6

Fig. 7

Fig. 8

Fig. 9

Fig. 10

Fig. 11

Fig. 12

A - A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4445875 A
- DE 10150228 A1
- DE 4119860 A1
- EP 0323755 A1
- US 3178807 A
- EP 1795772 A
- DE 3644204
- DE 4128179
- GB 987158 A
- US 4895549 A